Europäisches Patentamt

**European Patent Office**

**Office européen des brevets**

(11) Veröffentlichungsnummer: **0 183 646**
**B1**

(12) **EUROPÄISCHE PATENTSCHRIFT**

(45) Veröffentlichungstag der Patentschrift:
**10.08.88**

(51) Int. Cl.⁴: **A 61 C 13/00,** A 61 C 13/08,
A 61 C 13/263, B 22 C 9/00

(21) Anmeldenummer: **85810514.1**

(22) Anmeldetag: **04.11.85**

(54) **Verfahren zur Erzielung von Hinterschnitten oder retentiven Zonen in der Guss- und Formtechnik.**

(30) Priorität: **08.11.84 CH 5349/84**

(43) Veröffentlichungstag der Anmeldung:
**04.06.86 Patentblatt 86/23**

(45) Bekanntmachung des Hinweises auf die Patenterteilung:
**10.08.88 Patentblatt 88/32**

(84) Benannte Vertragsstaaten:
**AT BE DE FR GB IT LU NL SE**

(73) Patentinhaber: **Benzer Dental Zürich,
Saatlenstrasse 31, CH- 8051 Zürich (CH)**

(72) Erfinder: **Benzer, Eduard, Saatlenstrasse 31, CH-
8051 Zürich (CH)**

(56) Entgegenhaltungen:
**CH-A-614 621
DE-A-2 250 568
DE-A-3 144 859
DE-A-3 243 020
DE-B-2 910 070
DE-U-7 629 939
GB-A-2 129 362
US-A-3 375 582**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Im allgemeinen Sinne stellt sich die Erfindung die Aufgabe eine zuverlässige Klebeverbindung zwischen zwei Gegenständen aus verschiedenen Materialien herzustellen. Es ist häufig schwierig, einen Klebstoff zu finden, der an zwei verschiedenen Materialien zuverlässig haftet. Ein typisches Beispiel hier für tritt bei der Zahnbehandlung auf. Soll beispielsweise eine Brücke an zwei noch vorhandenen Zähnen verankert werden, hat man in neuerer Zeit versucht, um das rigorose Abschleifen von gesunden Zähnen zu vermeiden, die Brücke mittels einer Klebeverbindung zu fixieren. Die hier bei bisher verwendeten Klebstoffe ergeben eine gute Klebeverbindung mit einem ggf. geringfügig aufgerauhten Zahn, hingegen ist die Haftung an der aus Metall bestehenden Brücke nicht zuverlässig. Aus DE-A-3 243 020 ist ein Formgeber zur Bildung von Retentionskörpen bekannt. Weiter ist aus DE-U-7 629 939 ein wasserlösliches Modell bekannt.

Die Erfindung stellt sich die Aufgabe, auch mit dem Material der Brücke eine einwandfreie Haftverbindung herzustellen, und zwar dadurch, daß der ausgehärtete Klebstoff zusätzlich eine formschlüssige Verbindung mit dem Brückenmaterial eingeht. Dies wird durch das im Patentanspruch 1 angegebene Verfahren ermöglicht.

Es ist klar, daß das Verfahren nicht auf Dental-Anwendungen beschränkt ist, sondern ganz allgemein bei schwierigen Klebeverbindungen angewendet werden kann.

Anhand der Zeichnung wird das erfindungsgemässe Verfahren am Beispiel einer Applikation aus der Zahntechnik beschrieben.

Nach der Abdrucknahme wird auf bekannte Weise ein Modell 1 der Zahnverhältnisse des Patienten gemacht. Auf diesem Modell wird das Werkstück hergestellt. Dazu wird dieses aus Wachs, Kunststoff etc. geformt und dieses Zwischenprodukt später durch Guß-, Preß- oder andere Verfahren ins definitive Werkstück transformiert. Das erfindungsgemässe Verfahren wird bereits beim oben erwähnten Zwischenprodukt durchgeführt.

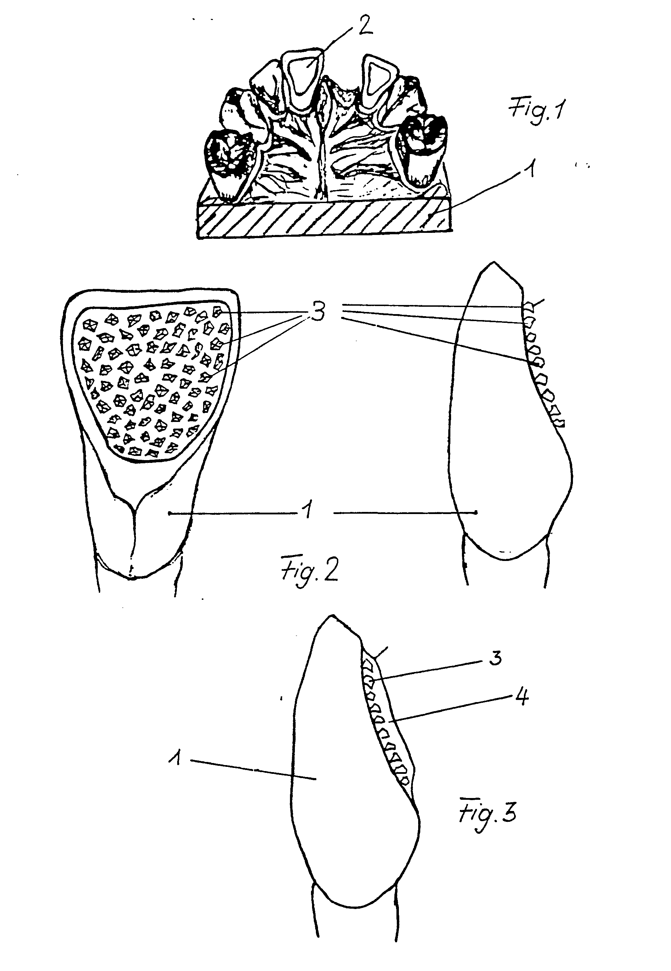

An dem in Fig. 1 dargestellten Modell werden die mit retentiven Zonen zu versehenden Partien 2 markiert und das Modell mit einem Isolierfilm überzogen, damit das nachher aufzubringende Formmaterial wie Wachs, Kunststoff etc. nicht anklebt.

Auf die Partien 2 wird eine dünne Schicht Klebstoff aufgetragen und auf den noch nicht ausgehärteten Klebstoff werden lösliche, vorzugsweise wasserlösliche Feststoffteilchen, beispielsweise kleine Kristalle möglichst vielzackiger Form oder Kugeln aufgestreut oder einzein aufgesetzt. Als besonders geeignet haben sich Zuckerkristalle erwiesen. Diese kleben an einem ganz kleinen Teil ihrer Oberfläche am Klebstoff fest (Fig. 2). Überschüssige Teilchen werden abgeblasen.

Nun wird flüssiges Wachs oder anderes Modelliermaterial 4 in die Zwischenräume der Kristalle und darüber gegeben und das Werkstück fertig modeliert, wie in Fig. 3 dargestellt.

Jetzt wird das Werkstück samt den darin festsitzenden Feststoffteilchen abgehoben. Das ist möglich, weil der Klebstoff nur eine geringe Klebekraft hat, die gerade genügt um die Teilchen beim Auftragen des Modellier materials 4 in Position zu halten. Die Feststoffteilchen befinden sich jetzt mit ihrem ganzen Volumen bis auf einen minimalen Teil ihrer Oberfläche (Leimkontakt) im Innern des Werkstückes.

Bei wasserlöslichem Leim und wasserlöslichen Festkörpern können die Festkörper samt anhaftendem Kleber unter fliessendem Wasser aufgelöst und ausgewaschen werden. Nach dem vollständigen Herauslösen hinterlassen sie die gewünschten retentiven Zonen im Modelliermaterial z. B. dem Wachsobjekt, das auf die übliche Weise weiterverarbeitet wird, z. B. durch Einbetten in hitzebeständige Massen, Ausschmelzen des Wachses und Eingiessen des flüssigen Metalles in die hinterlassene Form. Das Guß-Stück weist dann die retentiven Formen, die schon im Wachsobjekt gestaltet wurden, auf. Der Klebstoff, der zum Befestigen des Gußstückes verwendet wird, wird somit nach dem Aushärten zusätzlich zur stoffschlüssigen auch eine formschlüssige Verbindung eingehen.

Beim Modellgussverfahren (ein System, bei dem das Metall direkt auf ein hitzefestes Dublikat des Modelles gegossen wird) ist der Verfahrensablauf wie folgt:

Auf dem Modell werden die mit retentiven Zonen zu versehenden Partien markiert, Klebstoff aufgetragen und die Feststoffteilchen aufgestreut.

Jetzt wird das Modell samt aufsitzender Feststoffteilchen mit Dubliermasse übergossen. Nach Erhärten wird das Modell entnommen und die in der Dubliermasse verbleibenden Feststoffteilchen ausgewaschen.

Die Dublierform wird mit hitzebeständiger Einbettmasse ausgegossen. Auf diesem Einbettmassenmodeil erscheinen nun die Formen der ehemaligen Feststoffteilchen, da diese nach dem Verschwinden retentive Zonen in der elastischen Dubliermasse hinterlassen haben, in die die Einbettmasse hineinfliessen konnte. Die Formen der Feststoffteilchen sind jetzt erhaben (positiv) auf dem Einbettmassenmodell, welches wie üblich weiterverarbeitet wird.

## Patentansprüche

1. Verfahren zur Erzielung von retentiven Zonen in der Guß- und Formtechnik, dadurch gekennzeichnet, daß die gewünschten Formen der retentiven Zonen von in einem Lösungsmittel löslichen Feststoffteilchen (3) gebildet werden, indem diese Teilchen auf einem Modell (1) verteilt fixiert werden, hierauf ein Formmaterial (4) über die Teilchen auf das Modell aufgebracht wird, nach dessen Formung dieses Material mitsamt den Feststoffteilchen vom Modell abgezogen wird und schließlich die Teilchen zwecks Bildung der retentiven Zonen aus dem Formmaterial herausgelöst werden.

2. Verfahren nach Patentanspruch 1, dadurch gekennzeichnet, daß für die Feststoffteilchen ein wasserlöslicher Stoff, z. B. Zuckerkristalle verwendet werden.

3. Verfahren nach Patentanspruch 1, dadurch gekennzeichnet, daß die Feststoffteilchen mittels eines im gleichen Lösungsmittel wie diese löslichen Klebstoffes fixiert werden.

4. Anwendung des Verfahrens nach Patentanspruch 1 zur Herstellung von retentiven Zonen an allen mittels Haftvermittler einzusetzenden zahntechnischen und zahnärztlichen Werkstücken.

## Claims

1. A process for creating retentive zones in casting and moulding techniques, characterized in that the desired retentive zone shapes are formed by solid particle (3) that are soluble in a solvent, whereby these particles are distributed and fixed onto a model (1), a moulding material (4) is applied over these particles on the model, after this moulding this material together with the solid particles in removed from the model and the particles are finally leached out of the moulding material to form retentive zones.

2. A process according to Claim 1, characterized in that a water-soluble substance, e.g. sugar crystals, is used as the solid particles.

3. A process according to Claim 1, characterized in that the solid particles are fixed by means of an adhesive soluble in the same solvent as them.

4. Use of the process according to Claim 1 for the manufacture of retentive zones on all appliances set in place by means of adhesives in dental technology and dental surgery.

## Revendications

1. Procédé pour l'obtention de contre-dépouilles ou zones rétentives dans la fonderie et la moulerie caractérisé par le fait que les formes souhaitées des zones rétentives sont constituées par des petites particules de matière solide (3) solubles dans un dissolvant, les particules sont fixées et réparties sur un modèle (1), après quoi un materiau de moulage (4) est appliqué par dessus les particules sur le modèle, après la prise ce materiau et les particules sont enlevés du modèle et enfin que les particules sont extraites du matériau de moulage en vue de la formation des zones retentives.

2. Le procédé décrit à la revendication 1, du brevet est caractérisé par le fait que pour les particules de matière solide on utilise une matière soluble dans l'eau, p.ex. des cristaux de sucre.

3. Le procédé décrit à la revendication 1, du brevet est caractérisé par le fait que les particules de matière solide sont fixées au moyen d'une substance adhésive soluble dans le même dissolvant que ces particules.

4. Utilisation du procédé décrit à la revendication 1, du brevet pour la fabrication de zones rétentives sur tous les ouvrages de technique dentaire et de dentisterie implantés au moyen d'un agent adhésif.

2

Fig.1

1

3

1 1

Fig.2

3

4

1

Fig.3